(19) Europäisches Patentamt
European Patent Office
Office européen des brevets

(11) EP 4 535 739 A1

(12) EUROPEAN PATENT APPLICATION

(43) Date of publication:
09.04.2025 Bulletin 2025/15

(21) Application number: 23201285.6

(22) Date of filing: 02.10.2023

(51) International Patent Classification (IPC):
H04L 27/00 (2006.01)    H04L 27/26 (2006.01)

(52) Cooperative Patent Classification (CPC):
H04L 27/2657; H04L 27/0014; H04L 2027/002;
H04L 2027/0024; H04L 2027/0067

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Nokia Technologies Oy
02610 Espoo (FI)

(72) Inventors:
• SAAD, Majed
91300 Massy (FR)
• TERVO, Oskari
90630 Oulu (FI)
• LEHTI, Arto
92160 Antony (FR)

(74) Representative: Script Intellectual Property LLP
Suite J, Anchor House
School Close
Chandlers Ford
Eastleigh, Hampshire SO53 4DY (GB)

(54) METHOD, APPARATUS AND COMPUTER PROGRAM

(57) There is provided an apparatus comprising at least one processor and at least one memory storing instructions that, when executed by the at least one processor, cause the apparatus at least to perform: determining information relating to a phase noise coherency period for signals received from and/or transmitted to a second apparatus; and sending information relating to the phase noise coherency period to the second apparatus.

gNB 100 — UE 300

600 Phase coherence related information request

Determine phase coherence related information 602

604 Phase coherence related information response

Determine phase coherence period information 606

608 Phase coherence period information

Maintain phase noise consistency during coherence period 610

Determine event which changes phase noise consistency 612

Report event 614

Fig. 6

**Description**

TECHNICAL FIELD

Various example embodiments of this disclosure relate to a method, apparatus, system and computer program and in particular but not exclusively to phase noise compensation.

BACKGROUND

A communication network can be seen as a facility that enables communications between two or more communication devices, or provides communication devices access to a data network. A mobile or wireless communication network is one example of a communication network. A communication device may be provided with a service by an application server.

Such communication networks operate in according with standards such as those provided by 3GPP (Third Generation Partnership Project) or ETSI (European Telecommunications Standards Institute). Examples of standards are the so-called 5G (5th Generation) standards provided by 3GPP.

SUMMARY

Some example embodiments of this disclosure will be described with respect to certain aspects. These aspects are not intended to indicate key or essential features of the embodiments of this disclosure, nor are they intended to be used to limit the scope of thereof. Other features, aspects, and elements will be readily apparent to a person skilled in the art in view of this disclosure.

According to an aspect, there is provided a first apparatus comprising at least one processor and at least one memory storing instructions that, when executed by the at least one processor, cause the apparatus at least to perform: determining information relating to a phase noise coherency period for signals received from and/or transmitted to a second apparatus; and sending information relating to the phase noise coherency period to the second apparatus.

The determining information associated with the phase noise coherency period for signals received from the second apparatus may comprise one or more of: determining a time period in which phase noise is coherent; determining a time domain window in which phase noise is coherent; and/or determining information associated with the phase noise coherency period for signals received from the second apparatus comprises determining a validity timer associated with the phase noise coherency period.

The determining information associated with the phase noise coherency period for signals received from the second apparatus may comprise determining a time period in which phase noise is coherent.

The determining information associated with the phase noise coherency period for signals received from the second apparatus may comprise determining a time domain window in which phase noise is coherent.

The determining information associated with the phase noise coherency period for signals received from the second apparatus may comprise determining a validity timer associated with the phase noise coherency period.

The determining information associated with the phase noise coherency period for signals received from the second apparatus may comprise determining for a defined time period information about one or more levels of phase noise coherency within that defined time period.

The information associated with the phase noise coherency period may comprise information about one or more levels of phase noise coherency associated with the phase noise coherency period.

The level of phase noise coherency may be associated with one or more frequencies; one or more bandwidths; one or more subcarrier spacing; one or more reference signal time density; and/or one or more modulation and coding scheme.

The information associated with the phase noise coherency period may be associated with one or more of: one or more frequencies; one or more bandwidths; one or more subcarrier spacing; one or more reference signal time density; and/or one or more modulation and coding scheme.

The determining information associated with the phase noise coherency period for signals received from the second apparatus may be based on one or more of a configuration of the first apparatus or hardware of the first apparatus.

The configuration of the first apparatus may comprise one or more of bandwidth and subcarrier spacing.

The hardware of the first apparatus may comprise one or more local oscillators.

The determining information associated with the phase noise coherency period for signals received from the second apparatus may comprise determining information about buffering capacity in the first apparatus usable for phase noise compensation.

The first apparatus may be caused to receive information from the second apparatus relating to a time period for phase noise compensation.

The first apparatus may be caused to perform using a plurality of signals received from the second apparatus at different times within the time period for phase noise compensation to provide phase noise compensation for one or more of signals received from the second apparatus or signals transmitted to the second apparatus.

The first apparatus may be caused to perform controlling the first apparatus to avoid one or more events which would change the phase noise coherency during said time period for phase noise compensation.

The first apparatus may be caused to perform determining that one or more events which cause the phase noise coherency to change are to be performed in the time period for phase noise compensation and in response, send information indicating that the phase noise coherency will change to the second apparatus.

The first apparatus may be a user equipment or an access node.

Where the first apparatus is a user equipment, the second apparatus may be an access node or base station. Where the first apparatus is an access node or base station, the second apparatus may be a user equipment.

According to another aspect, there is provided a first apparatus comprising: means for determining information relating to a phase noise coherency period for signals received from and/or transmitted to a second apparatus; and means for sending information relating to the phase noise coherency period to the second apparatus.

The means for determining information may be for one or more of: determining a time period in which phase noise is coherent; determining a time domain window in which phase noise is coherent; and/or determining information associated with the phase noise coherency period for signals received from the second apparatus comprises determining a validity timer associated with the phase noise coherency period.

The means for determining information may be for determining a time period in which phase noise is coherent.

The means for determining information may be for determining a time domain window in which phase noise is coherent.

The means for determining information may be for determining a validity timer associated with the phase noise coherency period.

The means for determining information may be for determining for a defined time period information about one or more levels of phase noise coherency within that defined time period.

The information associated with the phase noise coherency period may comprise information about one or more levels of phase noise coherency associated with the phase noise coherency period.

The level of phase noise coherency may be associated with one or more frequencies; one or more bandwidths; one or more subcarrier spacing; one or more reference signal time density; and/or one or more modulation and coding scheme.

The information associated with the phase noise coherency period may be associated with one or more of: one or more frequencies; one or more bandwidths; one or more subcarrier spacing; one or more reference signal time density; and/or one or more modulation and coding scheme.

The means for determining information may be for determining information associated with the phase noise coherency period for signals received from the second apparatus based on one or more of a configuration of the first apparatus or hardware of the first apparatus.

The configuration of the first apparatus may comprise one or more of bandwidth and subcarrier spacing.

The hardware of the first apparatus may comprise one or more local oscillators.

The means for determining information may be for determining information about buffering capacity in the first apparatus usable for phase noise compensation.

The first apparatus may comprise means for receiving information from the second apparatus relating to a time period for phase noise compensation.

The first apparatus may comprise means for using a plurality of signals received from the second apparatus at different times within the time period for phase noise compensation to provide phase noise compensation for one or more of signals received from the second apparatus or signals transmitted to the second apparatus.

The first apparatus may comprise means for controlling the first apparatus to avoid one or more events which would change the phase noise coherency during said time period for phase noise compensation.

The first apparatus may comprise means for determining that one or more events which cause the phase noise coherency to change are to be performed in the time period for phase noise compensation and means for sending, in response, information indicating that the phase noise coherency will change to the second apparatus.

The first apparatus may be a user equipment or an access node.

Where the first apparatus is a user equipment, the second apparatus may be an access node or base station. Where the first apparatus is an access node or base station, the second apparatus may be a user equipment.

According to another aspect, there is provided a method comprising: determining information relating to a phase noise coherency period for signals received from and/or transmitted to a second apparatus; and sending information relating to the phase noise coherency period to the second apparatus.

The determining information may comprise one or more of: determining a time period in which phase noise is coherent; determining a time domain window in which phase noise is coherent; and/or determining information associated with the phase noise coherency period for signals received from the second apparatus comprises determining a validity timer associated with the phase noise coherency period.

The determining information may comprise determining a time period in which phase noise is coherent.

The determining information may comprise determining a time domain window in which phase noise is coherent.

The determining information may comprise determining a validity timer associated with the phase noise coherency period.

The determining information may comprise determining for a defined time period information about one or more levels of phase noise coherency within that defined time period.

The information associated with the phase noise coherency period may comprise information about one or more levels of phase noise coherency associated with the phase noise coherency period.

The level of phase noise coherency may be associated with one or more frequencies; one or more bandwidths; one or more subcarrier spacing; one or more reference signal time density; one or more reference signal time density; and/or one or more modulation and coding scheme.

The information associated with the phase noise coherency period may be associated with one or more of: one or more frequencies; one or more bandwidths; one or more subcarrier spacing; and/or one or more modulation and coding scheme.

The determining information may comprise determining information associated with the phase noise coherency period for signals received from the second apparatus based on one or more of a configuration of the first apparatus or hardware of the first apparatus.

The configuration of the first apparatus may comprise one or more of bandwidth and subcarrier spacing.

The hardware of the first apparatus may comprise one or more local oscillators.

The determining information may comprise determining information about buffering capacity in the first apparatus usable for phase noise compensation.

The first apparatus may comprise means for receiving information from the second apparatus relating to a time period for phase noise compensation.

The method may comprise using a plurality of signals received from the second apparatus at different times within the time period for phase noise compensation to provide phase noise compensation for one or more of signals received from the second apparatus or signals transmitted to the second apparatus.

The first apparatus may comprise means for controlling the first apparatus to avoid one or more events which would change the phase noise coherency during said time period for phase noise compensation.

The first apparatus may comprise means for determining that one or more events which cause the phase noise coherency to change are to be performed in the time period for phase noise compensation and means for sending, in response, information indicating that the phase noise coherency will change to the second apparatus.

The method may be performed by a first apparatus. The first apparatus may be a user equipment or an access node.

Where the first apparatus is a user equipment, the second apparatus may be an access node or base station. Where the first apparatus is an access node or base station, the second apparatus may be a user equipment.

According to another aspect, there is provided a second apparatus comprising at least one processor and at least one memory storing instructions that, when executed by the at least one processor, cause the apparatus at least to perform: receiving from a first apparatus information relating to a phase noise coherency period for signals received from the second apparatus and/or transmitted to the second apparatus; and using said information relating to the phase noise coherency period when applying phase noise compensation to one or more signals received from the first apparatus and/or to one or more signals transmitted to the first apparatus.

The second apparatus may be caused to perform sending a request to the first apparatus for the information relating to phase noise coherency period.

The second apparatus may be caused to perform determining, using the said information relating to the phase noise coherency period to determine a time period for phase noise compensation for the first apparatus and sending information about the time period for phase noise compensation to the first apparatus.

The second apparatus may be a user equipment or an access node.

Where the second apparatus is a user equipment, the first apparatus may be an access node or base station. Where the second apparatus is an access node or base station, the first apparatus may be a user equipment.

According to another aspect, there is provided a second apparatus comprising: means for receiving from a first apparatus information relating to a phase noise coherency period for signals received from the second apparatus and/or transmitted to the second apparatus; and means for using said information relating to the phase noise coherency period when applying phase noise compensation to one or more signals received from the first apparatus and/or to one or more signals transmitted to the first apparatus.

The second apparatus may comprise means for sending a request to the first apparatus for the information relating to phase noise coherency period.

The second apparatus may comprise means for determining, using the said information relating to the phase noise coherency period to determine a time period for phase noise compensation for the first apparatus and means for sending information about the time period for phase noise compensation to the first apparatus.

The second apparatus may be a user equipment or an access node.

Where the second apparatus is a user equipment, the first apparatus may be an access node or base station. Where the second apparatus is an access node or base station, the first apparatus may be a user equipment.

According to another aspect, there is provided a method comprising: receiving from a first apparatus information relating to a phase noise coherency period for signals received from the second apparatus and/or transmitted to the second apparatus; and using said information relating to the phase noise coherency period when applying phase noise compensation to one or more signals received from the first apparatus and/or to one or more signals transmitted to the first apparatus.

The method may comprise sending a request to the first apparatus for the information relating to phase noise coherency period.

The method may comprise determining, using the said information relating to the phase noise coherency period to determine a time period for phase noise compensation for the first apparatus and sending information about the time period for phase noise compensation to the first apparatus.

The method may be performed by a second apparatus. The second apparatus may be a user equipment or an access node.

Where the second apparatus is a user equipment, the first apparatus may be an access node or base station. Where the second apparatus is an access node or base station, the first apparatus may be a user equipment.

According to another aspect, there is provided a second apparatus comprising at least one processor and at least one memory storing instructions that, when executed by the at least one processor, cause the apparatus at least to perform: receiving from a first apparatus information relating to a phase noise coherency period for signals received from the second apparatus and/or transmitted to the second apparatus; determining, using the said information relating to the phase noise coherency period to determine a time period for phase noise compensation for the first apparatus; and sending information about the time period for phase noise compensation to the first apparatus.

The second apparatus may be caused to perform sending a request to the first apparatus for the information relating to phase noise coherency period.

The second apparatus may be a user equipment or an access node.

Where the second apparatus is a user equipment, the first apparatus may be an access node or base station. Where the second apparatus is an access node or base station, the first apparatus may be a user equipment.

According to another aspect, there is provided a second apparatus comprising: means for receiving from a first apparatus information relating to a phase noise coherency period for signals received from the second apparatus and/or transmitted to the second apparatus; means for determining, using the said information relating to the phase noise coherency period to determine a time period for phase noise compensation for the first apparatus; and means for sending information about the time period for phase noise compensation to the first apparatus.

The second apparatus may comprise means for sending a request to the first apparatus for the information relating to phase noise coherency period.

The second apparatus may be a user equipment or an access node.

Where the second apparatus is a user equipment, the first apparatus may be an access node or base station. Where the second apparatus is an access node or base station, the first apparatus may be a user equipment.

According to another aspect, there is provided a method comprising: receiving from a first apparatus information relating to a phase noise coherency period for signals received from the second apparatus and/or transmitted to the second apparatus; determining, using the said information relating to the phase noise coherency period to determine a time period for phase noise compensation for the first apparatus; and sending information about the time period for phase noise compensation to the first apparatus.

The method may comprise sending a request to the first apparatus for the information relating to phase noise coherency period.

The method may be performed by a second apparatus. The second apparatus may be a user equipment or an access node.

Where the second apparatus is a user equipment, the first apparatus may be an access node or base station. Where the second apparatus is an access node or base station, the first apparatus may be a user equipment.

According to an aspect, there is provided a non-transitory computer readable medium comprising program instructions that, when executed by an apparatus, cause the apparatus to perform at least the method according to any of the preceding aspects.

In the previous aspects, reference has been made to phase noise. Further aspects may be provided where the reference to phase noise is replaced by reference to jitter.

In the above, many different embodiments have been described. It should be appreciated that further embodiments may be provided by the combination of any two or more of the embodiments described above.

DESCRIPTION OF FIGURES

Some example embodiments will now be described, by way of non-limiting and illustrative example only, with reference to the accompanying Figures in which:

Figure 1 shows a representation of a 5th generation communication system;
Figure 2 shows a representation of an apparatus of the access node (gNB) of the communication system of Figure 1 according to some example embodiments;
Figure 3 shows a representation of an apparatus according to some example embodiments;
Figure 4 shows components for converting a signal at a radio frequency RF to an intermediate frequency IF or baseband frequency BB;
Figure 5 shows components for converting a signal at an intermediate frequency IF or baseband frequency BB to a radio frequency RF;
Figure 6 shows an example procedure of some embodiments;
Figure 7 schematically shows a PN coherence period;
Figure 8 shows a method of some embodiments;
Figure 9 shows a method of some embodiments;
Figure 10 shows a method of some embodiments; and
Figure 11 shows a method of some embodiments.

DETAILED DESCRIPTION

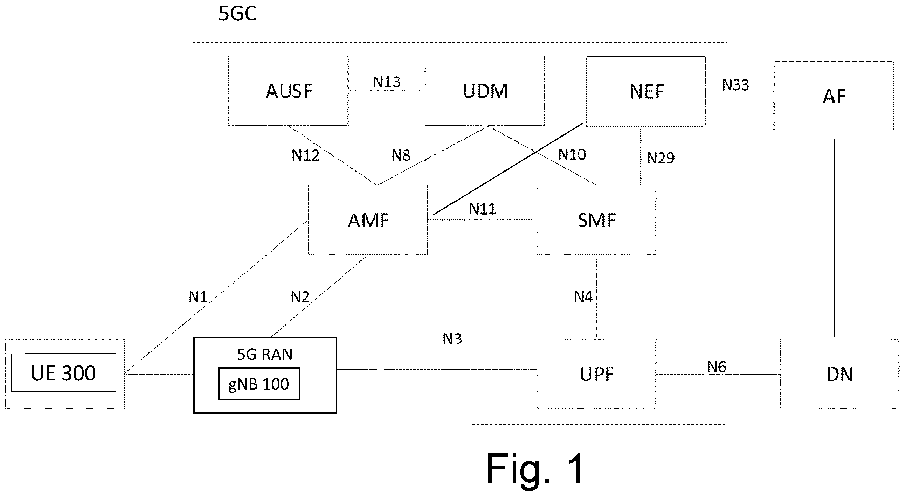

In the following various example embodiments are explained with reference to communication devices capable of communication with a communication system. Before explaining in detail the embodiments of the methods and apparatuses of the present disclosure, a 5th generation communication system (5GS), an access network and a core network (5GC) thereof, and communication devices are briefly explained with reference to Figures 1, 2 and 3.

Figure 1 shows a schematic representation of a 5G communication system (5GS). The 5GS may comprise a user equipment (UE) 300, an access network such as a 5G radio access network (5G-RAN) or next generation radio access network (NG-RAN), a 5G core network (5GC), and one or more application functions. An application function may be deployed in the 5GS as trusted application function or may be deployed or host on one or more application servers of the data network. Such application functions are untrusted application functions. The 5GS connects the UE to a data network the access network and the 5GC (e.g., a UPF of the 5GC).

The 5G-RAN may comprise one or more radio access nodes, such as gNodeB (gNB) 100. A gNB may include one or more gNodeB (gNB) distributed units connected to one or more gNodeB (gNB) centralized units .

The 5GC may comprise the following network functions: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF), and a user plane function (UPF). Figure 1 also shows the various interfaces (N1, N2 etc.) that may be implemented between the various elements of the system.

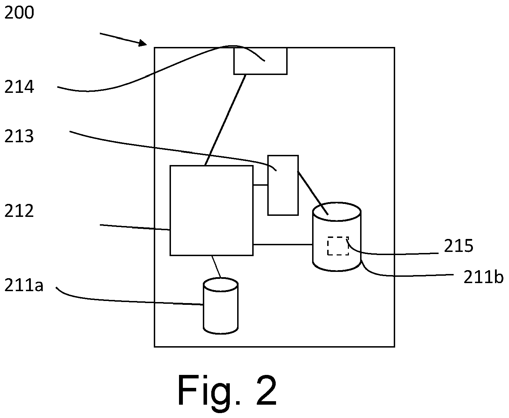

Figure 2 illustrates an example of a control apparatus 200 for controlling a function of the access network (e.g., a 5G-RAN or the NG-RAN) illustrated in Figure 1. The control apparatus 200 may comprise at least one memory 211a, 211b, at least one processor 212, 213 and a network interface 214. The at least one memory may comprise at least one random access memory (RAM) 211a and at least one read only memory (ROM) 211b. The at least one processor 212, 213 may be coupled to the RAM 211a and the ROM 211b. The at least one processor 212, 213 may be configured to execute an appropriate software code 215. Execution of the software code 215 may for example may cause the apparatus to perform operations for controlling a function of the access network. The software code 215 may be stored in the ROM 211b. The control apparatus 200 may be interconnected with another control apparatus 200 for controlling another function of the 5G-RAN or the NG-RAN. In some embodiments, each function of the 5G-RAN or the NG-RAN is deployed or hosted on a control apparatus 200. In alternative embodiments, two or more functions of the 5G-RAN or the NG-RAN may share a control apparatus.

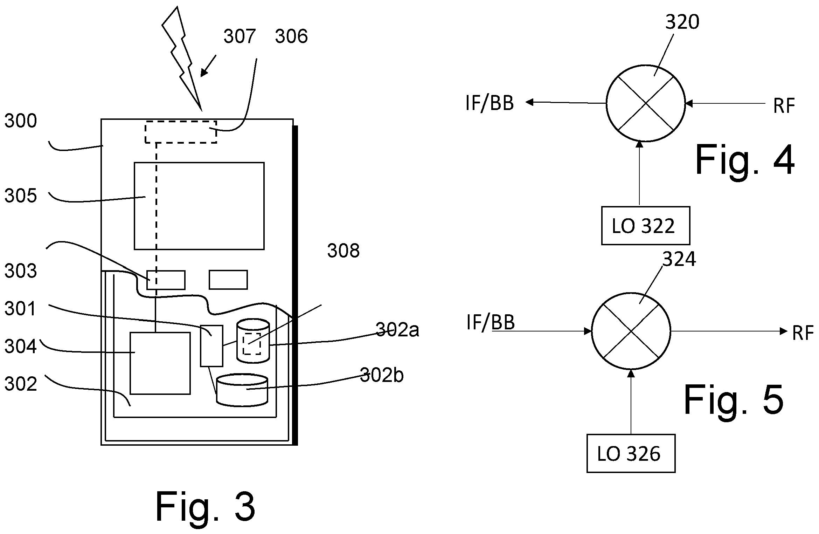

Figure 3 illustrates an example of a communication device 300, such as the UE 300 illustrated on Figure 1. The communication device 300 may be provided by any device capable of sending and receiving radio signals. Non-limiting examples of a communication device 300 comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The communication device 300 may comprise a transceiver for transmitting and/or receiving, for example, wireless signals carrying communications, for example radio signals. The communications may be one or more of voice, electronic mail (email), text messages, multimedia data, machine data and so on.

The communication device 300 may receive wireless signals (e.g., radio signals) over an air or radio interface 307 via appropriate apparatus for receiving and may transmit wireless signals via appropriate apparatus for transmitting radio signals. In Figure 3, a transceiver is designated schematically by block 306. The transceiver 306 may comprise, for example, a radio part and associated antenna arrangement. The antenna arrangement may be arranged internally or externally to the mobile device and may comprise one or more antenna elements. The antenna arrangement may be a multi-input multi output (MIMO) antenna.

The communication device 300 may be provided with at least one processor 301, at least one memory 302a, 302b, and other possible components 303 for use in software and hardware aided execution of tasks it is designed to perform, including control of access to and communications with access networks (e.g., the gNB of the 5G-RAN or NG-RAN illustrated in Figure 1) and other communication devices. The at least one memory may comprise at least one ROM 302a and at least one RAM 302b. The at least one processor 301 is coupled to the RAM 302b and the ROM 302a. The at least one processor 301 may be configured to execute an appropriate software code 308. The software code 308 may for example allow to perform one or more operations of the communication device. The software code 308 may be stored in the ROM 302a.

The processor, the ROM, and the RAM, the transceiver and other circuitry of the communication device (e.g., a modem) can be provided on a circuit board, in chipsets, or in a system on chip. The circuit board, chipsets or system on chip is denoted by reference 304. The communication device 300 may optionally have a user interface such as a keypad 305, touch sensitive screen or pad, combinations thereof or the like. Optionally one or more of a display, a speaker and a microphone may be provided depending on the type of communication device.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

Reference is made to Figure 4 which show some of the components for converting a signal at a radio frequency RF to an intermediate frequency IF or baseband frequency BB. A mixer 320 mixes a received radio frequency signal with a signal provided by a local oscillator LO 322 to provide a signal at an intermediate frequency or a base band frequency.

Reference is made to Figure 5 which show some of the components for converting a signal at an intermediate frequency IF or baseband frequency BB to a radio frequency RF. A mixer 324 mixes a received intermediate frequency signal or even a base band signa. with a signal provided by a local oscillator LO 326 to provide a signal at the radio frequency.

The arrangements of Figure 4 and/or Figure 5 may be provided in the UE 300 and/or the gNB 100. A UE and/or a gNB may have more than one LO.

Commercial interest for higher carrier frequencies than those currently used for 5G (typically less than 6GHz) is increasing. For example, interest for frequency bands such as FR2 and sub-THz is increasing. FR2 is from 24.25GHz to 71.0GHz. sub-THz is between 90GHz and 300GHz. 6G is expected to use also frequency bands between 7 and 15GHz.

With higher frequencies, RF impairments may be more pronounced. Phase noise (PN) may become more significant as the frequency which is used is increased.

Phase noise originates from for example, the local oscillator(s) (such as shown in Figures 4 and 5) used in the up and down conversion of signals to and from the radio frequency. Phase noise can be represented in frequency domain as random fluctuations in the phase of waveform corresponding to the time domain deviations from perfect periodicity. Phase noise and jitter are two related quantities associated with a noisy oscillator. Phase noise is a frequency-domain view of the noise spectrum around the oscillator signal, while jitter is a time domain measure of the timing accuracy of the oscillator period. It should be noted that the following describes phase noise compensation. However, other embodiments may provide jitter compensation.

In the following examples, reference has been made to phase noise. However, it should be appreciated that one or more of the following examples may alternatively or additionally be used for jitter compensation. The PN in OFDM-based systems such as CP-OFDM or DFT-s-OFDM may impact in a form of common phase error (CPE) which is common for all subcarriers, and/or inter carrier interference (ICI) which may be different for each carrier. The PN impact on performance may depend on the subcarrier spacing (SCS), e.g., such that for larger SCS the impact of ICI decreases. The PN impact may also depend on the MCS, e.g., such that for higher MCSs (modulation orders and/or code rates), the impact is more severe. PN compensation may be desirable particularly at higher frequencies. The PN compensation may compensate at least partially for common phase error and ICI resulting from PN.

Embodiments may be used with any suitable waveform. By way of example, embodiments may be used in OFDM (orthogonal frequency division multiplexing) based systems (including DFT-s-OFDM (discrete Fourier transform spread orthogonal frequency division multiplexing))

A PN spectrum may depend on the used local oscillator(s). The effect of PN may depend on the signal bandwidth (or symbol rate) among other factors. The PN may be modelled by a simple combination of a correlated PN component(s) (e.g., a Wiener type component and/or another suitable component) and an uncorrelated component (e.g., a White Gaussian type of PN). The threshold for the dominant factor between the uncorrelated component (e.g., the Gaussian component) and the correlated component (e.g., the Wiener component) may be approximated as:

$$N \cdot f_c^2 \cdot T^2 \leq \frac{\ln(2)}{2\pi^2}.$$

where N is the number of symbols (samples), $f_c$ is the oscillator corner frequency, and T is the symbol duration.

If the above condition is satisfied, PN may be appropriately modelled as uncorrelated, e.g., as Gaussian as the uncorrelated component has the dominant effect. This may be the case with a larger bandwidth (small symbol period T). However, at lower frequency ranges such as frequency bands between 6 and 71 GHz the PN may be non-negligible and impact the performance. The PN may be mainly dominated by correlated components that may be relatively slowly varying over time. Some frequency bands which may be used may be between 6 and 15GHz or between 24.25GHz to 71.0GHz (this is sometimes referred to as FR2).

The impact of PN, for example the ICI-related component, can be reduced by increasing SCS (subcarrier spacing) which increases the distance between the consecutive subcarriers. However, in 6G development, it may be desired to keep SCS as small as possible to keep the CP duration reasonable, and rather increase the FFT (Fast Fourier Transform) size with smaller SCS to achieve the higher bandwidths.

Correlated PN may be a dominant component at some frequencies. By way of example, such frequencies may be between 6 and 71 GHz

Some embodiments may relate to the use of reference or other signals to determine phase noise compensation. The other signals may be previously received data symbols that are correctly decoded, for example having a correct CRC code for the data. This may be for the correlated PN compensation. Some embodiments may be used where the correlated PN is a dominant component but other embodiments may be used where the correlated PN is not dominant.

Some embodiments may make use of reference signals. The reference signal may be a phase tracking reference signal PTRS. The reference signal may be as described in relation to release 18 of the 5G standard or may take any other suitable form.

The PTRS such as discussed in release 18 of the 5G standard may be provided in data channels. If the network has configured the PTRS to be present in data channels, the PTRS is associated with one DMRS (demodulation reference signal) port may be confined to the scheduled bandwidth and duration of PDSCH/PUSCH (physical downlink shared channel/ physical uplink shared channel).

For example, for DFT-s-OFDM, the PTRS pattern in each symbol may depend on PRB (physical resource block) allocation thresholds which may be configurable. This may be regarded as a sample density. The PTRS time-domain density (at the OFDM symbol-level) may be configurable. This may be regarded a time density.

The reference signals may alternatively or additionally be provided by previously received data symbols that are correctly decoded (e.g., have a correct CRC (cyclic redundancy check)).

A reference signal may be used to determine a phase noise component in a signal which can be compensated for.

In some embodiments, a PTRS or other reference may be provided on data channels only. In other embodiments, a PTRS or other reference signal may be used on control channels. In some embodiments, a PTRS or other reference signal may be used on data and control channels.

Some embodiments may allow the determination and/or indication of a time domain window or PN validity timer for PN pre/post-compensation over multiple symbols/slots for the same or different physical channels.

PN pre compensation may be applied to a signal before it is transmitted. PN post compensation may be applied to a signal after it has been received.

In some embodiments, methods are used at the UE and/or the gNB to determine or indicate information relating to a PN coherency period. The information may relate to a period for which the PN is coherent or for which there is at least a given level of PN coherency within a given time period. The information may be a PN related period, a PN time domain window, a PN duration and/or a PN validity timer. Such a PN coherency period may span over multiple physical channels and/or multiple symbols or slots.

The PN coherency period is a time period in which the phase noise is coherent, that is the PN is relatively constant or varies by a relatively small amount. PN coherency may be determined to be present when the phase noise drift is smaller than a threshold, or phase noise correlation between the different samples in this period satisfies at least a given threshold.

The PN coherency period may be defined by a timer which will indicate the time for which the PN coherency period is valid. This may be referred to a PN validity timer. The PN validity timer may be defined by a stop time and optionally a start time.

The PN coherency period may be defined by a duration which indicates how long the PN coherency period will last. This is a PN duration.

The PN coherency level defines the level of coherency within the PN coherency period. This may be a measure of variability of the level of coherency or correlation within the PN coherency period. The PN coherency level may be defined by a level of correlation of phase noise within the PN coherency period.

A time domain window TDW defines the window in which phase noise is considered coherent and in which PN compensation can be applied using for example two or more signals received in that time domain window. The TDW may be the same size or smaller than the PN coherency period. The TDW may take into account hardware limitations such as a buffer size or the like.

This information relating to a PN coherency period may be used to control PN pre and/or post compensation algorithms. During a PN coherency period, a current reference signal as well as one or more previous reference signals in the PN coherence period may be used to estimate and compensate PN. Alternatively, or additionally current and previous correctly detected data symbols may be used to estimate and compensate PN. This may provide better coverage and/or an improved data rate. This may avoid or reduce coverage degradation and./or throughput degradation due to improper PN estimation using an outdated PTRS or PTRS symbols. Some embodiments may allow for a reduction of the PTRS or other reference signal overhead reduction within this period in which the PN is coherent.

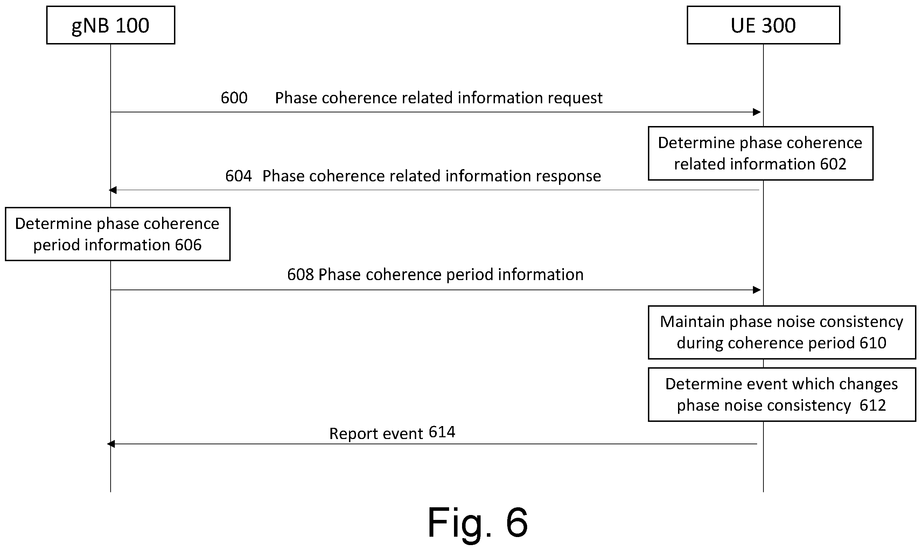

Reference is made to Figure 6, the gNB 100 may request assistance information from the UE 300. The assistance information may relate to phase coherence. The phase coherence information may relate to a time for which the phase noise is considered coherent. The assistance information is requested by the gNB 100 in order to determine, indicate and/or configure at least one of the following:

a time domain window, a phase noise validity timer, or a PN coherence period.

The time domain window, the phase noise validity timer, or PN coherence period may be regarded as defining a time frame within which the PN can be treated as being coherent, that is not to vary significantly or to vary within one or more thresholds. In the following, the time frame within which the PN can be treated as coherent provides a time period for PN compensation.

As referenced 602, the UE determines at least one of the following:

UE PN coherence period; UE maximum PN validity timer; and/or UE capability relating to the maximum buffering period for UE PN pre and/or post compensation.

The period/timer indication may be expressed in terms of number of OFDM symbols or slots for specific numerology, number of subframes, absolute time duration, a percentage of a reference TX (transmit) duration, or a fraction of a reference TX duration.

As referenced 604, the UE sends a phase coherence related information response to the gNB. This response may comprise the determined UE PN coherence period; UE maximum PN validity timer; and/or UE capability relating to the maximum buffering period for UE PN pre/post compensation. The reporting may be configured by the gNB to happen e.g., periodically or semi-statically. The reporting may be configured as part of the UE capability in some embodiments.

As referenced 606, the gNB determines and configures a TDW, a PN overall coherence period, or a PN validity timer to be considered when applying PN pre/post PN compensation at the UE and/or the gNB. The PN overall coherence period determined by the gNB may be based on its own PN coherence period as well as that of the UE. In other words, the PN overall coherence period is based on considering jointly the UE PN coherence period and gNB PN coherence period.

As referenced 608, the UE receives an indication from gNB about the determined TDW, PN overall coherence period, or PN validity timer.

As referenced 610, the UE attempts to maintain its PN consistency during this indicated TDW, PN overall coherence period, or PN validity timer period. The UE attempts to avoid any event which may break this PN consistency.

However, as referenced 612 the UE may need to perform an event which breaks its PN consistency.

In this case, the UE may report or indicate that such an event has occurred or will occur to the gNB as referenced 614.

The gNB may revert to the part of the procedure referenced 600.

The reporting or indicating of an event breaking the PN consistency may result in the resetting or restarting of the TDW, a PN overall coherence period, or a PN validity timer.

The gNB may adjust the TDW/PN validity to consider any reported event from the UE or its own event breaking PN consistency during the indicated PN TDW or validity timer.

Where the gNB has knowledge of an event in advance of the occurrence of the event, the gNB may shorten the TDW/PN validity. The gNB may notify the UE of the shortened period.

The arrangement of Figure 6 may be modified such that the UE performs one or more of the actions of the gNB and the gNB performs one or more of the actions of the UE.

As mentioned previously, the UE may determine a UE PN coherency period. For example, this PN coherency period may be the UE PN coherence period or UE PN maximum validity period. This may be based on the UE LO being used.

The UE may determine a PN coherency period for a specific carrier frequency or band. This period is where the UE is able to maintain PN coherency. For example, the PN coherency may be PN consistency, phase continuity, and/or PN drift rate within a pre-determined level or threshold. The period may be for a specific configuration such as a given BW and/or SCS and or the like.

For example, the UE determines as the PN coherency period a maximum period where PN correlation between two pre-defined symbols or slots (e.g., first and last) is expected to be greater than or equal to a first threshold X% (e.g., 90% correlation or other suitable value).This provides a PN correlation level. This may be based on prior knowledge that the UE has of its LO PN characteristics/model.

Alternatively or additionally, the PN correlation range is pre-determined or configured by the gNB. In other words, the gNB defines a period or a duration and the UE indicates the PN correlation level that that the UE is able to maintain within that period. The UE may indicate its PN correlation level for the pre-defined/determined period.

In some embodiments, there may be a bit mapping which may be used to indicate to the gNB the PN correlation level. The bit mapping used may be configured by the gNB or may be defined by a specification of a standard. An example is provided below where the PN correlation level is defined as being less than level 1, between level 1 and level 2, between level 2 and level 3, and greater than level 3. Each of these options is indicated by a different two bit value which is included in a message or signalling from the UE to the gNB. By way of example only level 1 may be that the PN correlation within the time period is 50%, level 2 may be that the PN correlation within the time period is 80%, level 3 may be that the PN correlation within the time period is 90%. These values are by way of example only. In other embodiments, there may be more than 3 levels.

| PN correlation level within a pre-determined period/duration T (denoted by PNcoh_T in this table) | Bit mapping |
| --- | --- |
| PNcoh_T < Level1 | 00 |
| Level1 <= PNcoh_T < Level2 | 01 |
| Level2<= PNcoh_T < Level3 | 10 |
| PNcoh_T >= Level3 | 11 |

Additionally or alternatively, UE determines and indicates periods corresponding to a pre-determined PN correlation level. In other words, the gNB defines the correlation level or range and the UE indicates the time, that this the PN coherency period, for which the UE is able to maintain that required level of PN correlation. The UE may indicate its PN coherency period, for the pre-defined/determined correlation level. In some embodiments, there may be a bit mapping which may be used to indicate to the gNB the PN coherency period. The bit mapping used may be configured by the gNB or may be defined by a specification of a standard. An example is provided below where the PN coherency period is defined as being less than duration 1, between duration 1 and duration 2, between duration 2 and duration 3, and greater than duration 3. Each of these options is indicated by a different two-bit value which is included in a message or signalling from the UE to the gNB. By way of example only the duration may be defined in terms of slots. For example, duration 1 may be 1 slot, duration 2 may be 2 slots, duration 3 may be 4 slots. These values are by way of example only. In other embodiments, the durations may be defined in terms OFDM symbol duration or in seconds. In other embodiments, there may be more than 3 durations.

| Period/duration corresponding to a pre-determined PN coherence or correlation level (denoted by T_PNcoh in this table) | Bit mapping |
| --- | --- |
| T_PNcoh < duration1 | 00 |
| duration 1<= T_PNcoh < duration 2 | 01 |
| duration 2<= T_PNcoh < durations | 10 |
| T_PNcoh >= duration 3 | 11 |

Alternatively or additionally, the UE indicates its PN drift rate. The UE may indicate the actual drift rate or if the drift rate is above or below one or more drift rates or if the drift rate is in a defined range. In some embodiments, different ranges of drift rate may be defined. Where different ranges of drift rate are defined, then different ranges may be defined by bit mapping in a similar manner to that discussed for example, in relation to the duration for the PN coherence level.

The drift rate may indicate the amount by with the PN may change or drift with respect to a time unit (e.g., second, OFDM symbol period, slot, coherence period, etc.). In some embodiments, the PTRS or other reference signal configuration may be adjusted by the gNB according to indicated PN coherence information. As an example, a high correlation level within a predetermined duration may allow the gNB to reduce the PTRS density (that is the number and/or spread of PTRS that are required). As another example, a low correlation level within a predetermined duration may require the gNB to increase the PTRS density.

The UE may provide an indication to the gNB that may be used to set a PTRS or other reference signal density. For example, the indication may have n values. A lower value of the indication may indicate a low correlation level and a higher value of the indication may indicate a higher correlation level (or vice versa). By way of example only, n may be 4 but n may be more or less than 4. The indication may be used with one or more other factors to set the time density of the PTRS or other reference signal. The one or more other factors may comprise MCS (modulation and coding scheme) and/or RB (resource block) allocation and/or any other factor.

In some embodiments, the UE may recommend to the gNB a PT-RS density or other reference signal density. This recommended density may be associated with one or more of a given UE PN coherence period, a given validity timer, a given buffering period, and/or the like. Similarly, the gNB may configure a PT-RS density or other reference signal density. This recommended density may be associated with one or more of a given PN coherence period, a given TDW, a given validity timer, and/or the like.

For example, the PT-RS density or other reference signal density may implicitly indicate information related to a PN coherence period. The PN coherence period may be one or more durations between two reference signals. For example, a recommended or configured time domain PT-RS density of X OFDM symbols duration may implicitly indicate a PN coherence period of (X*N) OFDM symbol duration, where N is a pre-determined value greater than or equal to 1.

The indicated PN coherence information may be used in a pre and/or post compensation algorithm to provide a weighted PN estimation using the symbols within PN coherence period.

As an example, the PN estimations using symbols of the PTRS or other reference signal corresponding to a low PN coherence level may have a smaller weight compared to the current PN estimation using most recent symbols of the PTRS or other reference signal. For example, the weight of the PN estimated in slot or symbol n-2 $\leq$ weight of PN estimated in slot or symbol n-1 $\leq$ weight of PN estimated in slot or symbol n. In contrast, the weights may be the same at a high PN correlation level. Where the PN correlation level is low, one or more weights may be set to zero. This would be for less recently received symbols.

When determining information relation to the PN coherency, the UE may take into account one or more of the following:

Information related to the LO/RF hardware - this information may comprise UE prior knowledge of its LO/RF hardware or PN characteristics, measurements made by the UE, and/or data obtained from a lookup table stored on the UE. The LO behavior may be assumed to be static or may be updated by UE during its RF calibration phase. Where a look up table is stored on the UE, the look up table may be updated as a result of the calibration phase;

UE known pre-configuration with a same network or a different network that may require changing the LO frequency or which may impact PN coherency. For example, this may be DTX/DRX (discontinuous transmission/ discontinuous reception) configuration, EN-DC (E-UTRAN (evolved UMTS (universal mobile telecommunications system) radio access network) new radio - dual connectivity) , SSB(synchronization signal block)/PDCCH (physical downlink control channel) monitoring at different frequency, or the like; and/or

TDD (time division duplex) slot/frame format

This PN coherency period may be regarded as the UE recommended: maximum period for PN estimation for pre or post-compensation; or the UE maximum PN validity timer.

UE PN coherency may be used to indicate that there is no event(s) known or transparent to the gNB leading to an abrupt PN change.

UE PN just before and just after an event breaking the PN coherency are not correlated.

PN coherency may be broken in one or more of the following ways:

The UE changes its local Oscillator (LO). For example, in MIMO different antenna(s)/panel(s) may be equipped with different LOs and the UE may switch to use another panel/antenna(s). The UE may support multiple antenna panels (UE side(s)/ UE top/bottom) and select the most appropriate one as required. For example, where one panel is blocked (e.g., blocked by user's hand), the UE may switch to a different panel;

The UE performs a new RF calibration of its LO;

The UE performs PN pre-compensation in UL for some transmissions or physical channels and not for the other(s) without providing an indication to the gNB or without coordination with the gNB. This may be due to the capability of the UE;

The UE calibrates the same LO to transmit/receive mainly on another carrier frequency with another cell/gNB/TRP (transmission reception point); and/or

The UE switches BWP (bandwidth part) with the same LO. A different BW (bandwidth) size may have different PN properties. For example, a wider BW may have a less correlated PN which leads to a smaller PN validity period and vice versa.

In some embodiments, the UE maximum buffering period for PN pre or post compensation at UE is taken into account. The UE maximum buffering period may be associated with a configuration of the UE. In other embodiments, the UE buffering period may be applicable for any configuration of the UE.

The UE may indicate its maximum buffering capability/period for:

previous PN estimation(s) or received PTRS symbols(s) or correctly detected data symbols that may be used for PN pre-compensation at UE Tx; and/or,

received PTRS symbols or correctly detected data symbols that may be used for PN post-compensation at UE Rx.

The UE buffering period may be too small to cover the entire UE PN coherence period. In that scenario, the effective PN coherence period is reduced. This may lead to a TDW for example being smaller than the PN coherence period.

The UE buffering period can be larger than UE PN coherence period at some carrier frequencies if this indication is not associated per carrier frequency and/or other configuration such as SCS, BW, and/or the like. For example, the UE PN coherence period at higher FR2 or sub-THz may be smaller than the buffering period.

This buffering period is not needed/relevant for PN pre-compensation/post-compensation at gNB which has a much larger buffering capability.

The reporting of the maximum buffering period for the UE Tx PN pre-compensation, may avoid the gNB possibly operating on the worst assumption (no pre-compensation) and thus maintaining its best PN post-compensation when PTRS or other reference signal is present, and possibly considering conservative configuration to guarantee successful reception (possibly reducing data rate).

The reporting of the maximum buffering period for the UE Rx PN post-compensation, may avoid the gNB performing blind decision of PTRS density when it is present (no possible overhead reduction) or considering non-optimal configuration of time domain signals and/or physical channels.

The UE may indicate its PN characteristics to gNB. The PN characteristics may be defined with one or more parameter or a set of parameters to specify a PN model or PN PSD (power spectral density) as an example. This information may be used by the gNB to determine the UE coherence period, for example.

PN characteristics may be related to PN PSD (PN variation with frequency around a specific carrier frequency); PN variances; PN level(s); PN slopes; offset frequency; the zeros/poles in a PN PSD model and their orders; and/or the like.

The indication may be related to the PN PSD model specified in 3GPP, for example such as the model defined in TS 38.808, Section 4.2.3.1.

The gNB may determine the overall PN coherency period or overall PN maximum validity period considering Tx and/or RX LOs. The Tx and/or RX LOs may change the overall PN coherence period when considering jointly transmitter and receiver PN coherence periods for example gNB and UE in UL/DL, or two UEs in sidelink.

The overall PN coherence period considering Tx and Rx LOs may be equal or smaller than UE PN coherence period indicated by UE, or determined from an indicated PN drift rate by the UE as discussed previously.

The overall PN coherence period considering Tx and Rx LOs may be equal or smaller than UE PN coherence period which is determined by the gNB based on UE reporting of the PN characteristics such as previously discussed. For example, the parameters may be modeling PN PSD.

As an example, the overall PN coherence period may be determined at gNB as follows:

*Overall PN coherence period = Min(UE PN coherence period, gNB PN coherence period, generic period),* where the generic period may be set to infinity when it is not needed or 0 to deactivate processing over multiple symbols/slots with PN pre/post compensation. Otherwise, the generic period can be used to consider, for example, a periodic event (e.g., periodic RF calibration), cell or UE specific configuration/indication that may impact PN consistency (e.g., frame/slot format, etc.).

In another example, the overall PN coherence period may be determined at gNB as follows:

*Overall PN coherence period =*

*(UE PN coherence period) \* Scaling factor*

where the scaling factor is between 0 and 1.

In some embodiments, the scaling factor may be used to give some margin for additional phase noise drift or potential errors in the estimation/synchronization algorithms (e.g., residual frequency offset after its compensation could be seen as another phase error adding up to the PN).

A time domain window for PN pre/post compensation or PN validity timer may be used.

This TDW or PN validity timer would allow the determination of the previous estimated PN or received symbols of the PTRS during the previous and current UL-DL exchange that can be used for PN estimation and/or pre/post PN compensation.

This time domain window TDW for PN compensation may be used to determine at UE or gNB for received signals, the maximum period for PN post-estimation/compensation. For example, this may be the PTRS bundling period and the estimated PN reusing period. Where correctly detected data symbols are used as the reference, the estimated PN reusing period may that of previously correctly detected data symbols.

This time domain window TDW for PN compensation may be used to determine at UE or gNB for transmitted signals the applicability of PN pre-compensation or validity of previous estimated PN, received PTRS or correctly detected data symbols for PN pre-compensation.

The UE PN coherence period or UE maximum PN validity period such as previously discussed may be used at gNB to determine and optionally to configure at least one of the following:

TDW for PN processing - this is less than or equal to the overall PN coherence period or overall PN maximum validity period;

TDW for PN processing - this is less than or equal to min(overall PN coherence period or PN maximum validity period, UE buffering period), in case TDW is configured for UE with Tx UL PN pre-compensation or UE with RX DL PN post-compensation; and/or

PN validity timer - this is less than or equal to overall PN coherence period or PN maximum validity period, where this time domain window/period or timer may restart/reset after any pre-determined or indicated events breaking PN consistency at UE or gNB. The restart may be delayed by a pre-determined/configured time offset to allow possible RF calibration at Tx and/or Rx if any.

The TDW or PN validity timer may be reset/restarted by gNB when its estimated residual PN is above certain threshold. Similarly, UE can request such a timer reset or TDW restart.

The time domain window (TDW) for PN pre/post compensation may span the duration of multiple symbols/slots for same/different physical channels carrying same/different TBs (transport block).

For example, the TDW may be delimited by the start/end symbol or slot relative to one or more of:

a transmission or reception of a pre-determined/defined physical channel;

the last (successfully) n-th transmitted/received physical channel;

an event that breaks PN consistency (e.g., PTRS port switch, DTX/DRX, RF LO calibration, etc.). This means a TDW restart after this event immediately or certain pre-determined or configured time offset or at the beginning of next slot/transmission occasion;

slot boundary;

common absolute reference point in time (Point X: e.g. SSB transmission, successful RRC (radio resource control) connection) that may be UE specific with/without an additional time offset; and/or

the like.

The TDW may be of a fixed length configured by gNB and delimited as discussed previously. The TDW may be defined without considering any events breaking PN consistency. Another TDW may be defined to be more flexible/-adaptive to take into account events breaking PN consistency. For example, one TDW may be provided considering any event breaking PN consistency. Alternatively, two TDW may be defined where the first TDW is of pre-defined length (nominal TDW), and the second TDW (actual TDW) may be smaller or equal to the first TDW. The second TDW may be regarded as a subset of the first TDW.

A nominal and/or actual time domain window may be defined according to the previously discussed starting/ending point, or starting point and a pre-determined length.

An actual TDW for PN compensation may be this is less than or equal to a nominal TDW for PN compensation where actual TDW may be delimited as example by any event that breaks PN consistency. This may be the case where the event is not considered in the nominal TDW definition and/or device buffering or processing capability/preference.

The TDW may be a sliding window moving relative to instant t or current transmission/reception instant where the TDW would start the earliest at t- T for a pre-defined TDW of length T if there are no events leading to breaking of PN consistency. Otherwise the TDW may start immediately after an event leading to breaking of PN consistency or after an time offset relative to this event.

The TDW or PN validity timer may be adjusted according to signal quality (RSRP (reference signal received power), SNIR (signal to noise interference ratio), CQI channel quality indicator, etc.) to make sure used PN estimations and/or symbols for PN estimations are useful to be considered in PN pre/post compensation. This may avoid or reduce any coverage or data rate degradation. For example, the signal quality information may be used to make sure the used PN estimations and/or symbols for the PN estimations are above a given threshold for reliability and/or accuracy.

The TDW or PN validity timer may be dynamically decreased/increased to adjust the PN estimation algorithm and/or frequency of PN estimation according to channel conditions and/or signal quality. For example, the TDW or timer is decreased by a pre-determined factor when RSRP/CQI or other signal quality parameter falls below a threshold to avoid using low accuracy PN estimations, and vice versa. This may be while respecting the upper bound related to the PN coherence period.

The indicated period/timer may indicate to the receiver if the transmitter PN pre-compensation is not performed due to the absence of PN estimations or data symbols within validity timer.

The receiver may adjust dynamically its PN estimation/compensation. For example, the receiver may activate correlated PN estimation and compensation, adjust the algorithm used for PN estimation since no PN pre-compensation may mean that both correlated PN and uncorrelated PN are present in the received signal, and/or the like.

The indicated TDW or validity timer instructs the maximum window size that may be used in PN estimation (for example for averaging, filtering, interpolating, bundling, reusing same previous value, and/or the like) and pre/post-compensation.

When uncorrelated PN part is negligible (i.e., a relatively high PN correlation level within a predefined period, or a large PN coherence period), the gNB may reduce the PTRS or other reference signal overhead to avoid transmitting unused PTRS or other reference signal. The UE may report PTRS or other reference signal reporting preferences according to its PN estimation algorithm or its evaluation of residual PN.

The determination and indication of TDW or PN validity timer by gNB to the UE may be provided in some embodiments. The UE may not require, in some embodiments information relating to the overall PN coherence period or overall PN maximum validity period.

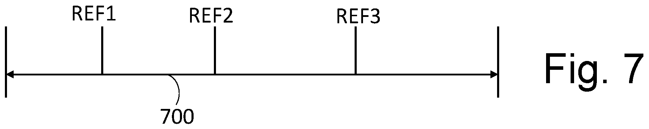

Reference is made to Figure 7 which schematically shows a PN coherence period 700 and within that PN coherence period, three signals which are to act as references are provided. Those signals are referred to as REF1, REF2 and REF3. It should be appreciated that these signals may be reference signals such as PTRS signals or may be previously received data symbols that been correct received. In the case that be previously received data symbols that been correct received are used, there may be more reference samples than the three shown. It should be appreciated that in other examples where a PTRS is used more or less than three PTRS may be received in the PN coherence period 700. The PN coherence period may be determined as previously discussed. The signals which are to act as references may be transmitted to the UE by the gNB. Alternatively or additionally, the signals which are to act as references may be transmitted to the gNB from the UE.

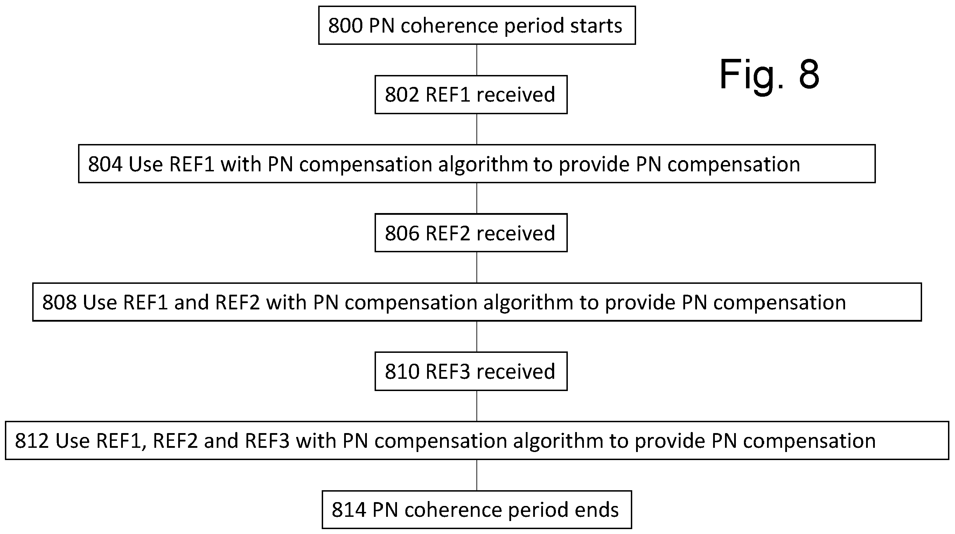

Reference is made to Figure 8 which shows a method of some embodiments which use the three references shown in Figure 7. The method shown in Figure 8 may be performed by the UE and/or the gNB. The references will be the signals which are received by the UE and/or gNB performing the method.

As referenced 800, the PN coherence period starts.

As referenced 802, the first reference, REF1, is received.

As referenced 804, a determination is made based on the first reference REF1 as to the PN compensation which is be provided for signals which are received by the entity (that is the UE or the gNB) performing the method. The PN compensation may be pre or post PN compensation. The determination may be the selection of a PN compensation algorithm from a plurality of PN compensation algorithms. Alternatively or additionally the determination may comprise the determining of one or more values from the reference signal which are to be used by the PN compensation algorithm to determine the PN compensation to be applied to a received signal.

As referenced 806, the second reference, REF2, is received.

As referenced 808, a determination is made based on the first reference REF1 and the second reference REF2 as to the PN compensation which is be provided for signals which are received by the entity (that is the UE or the gNB) performing the method. The PN compensation may be pre or post PN compensation. The determination may be the selection of a PN compensation algorithm from a plurality of PN compensation algorithms. Alternatively or additionally the determination may comprise the determining of one or more values from the reference signal which are to be used by the PN compensation algorithm to determine the PN compensation to be applied to a received signal.

The different references may have different weightings with the more recent reference signals having a higher weighting than the less recent signals having a lower weighting. The different references may alternatively have the same weighting.

As referenced 810, the third reference, REF3, is received.

As referenced 812, a determination is made based on the first reference REF1, the second reference REF2 and the third reference REF3 as to the PN compensation which is be provided for signals which are received by the entity (that is the UE or the gNB) performing the method. The PN compensation may be pre or post PN compensation. The determination may be the selection of a PN compensation algorithm from a plurality of PN compensation algorithms.

Alternatively or additionally the determination may comprise the determining of one or more values from the reference signal which are to be used by the PN compensation algorithm to determine the PN compensation to be applied to a received signal.

The different references may have different weightings with the more recent references having a higher weighting than the less recent signals having a lower weighting. In some embodiments only the n most recent references are taken into account. The different references may alternatively have the same weighting.

As referenced 814, the PN coherence period ends. The method of Figure 8 may be repeated for the next PN coherence period.

In the example of Figures 7 and 8, three references are provided. However it should be appreciated that more than three ( or less than three) PTRS or other references may be provided.

In some embodiments, a combination of reference signals and correctly received data symbols may be used to provide phase noise estimation compensation. This may be used for example where the reference signals are provided for one or more but not all channels or to provide a better accuracy of PN estimation and compensation. Correctly received symbols may be used for one or more channels.

In some embodiments, PN compensation is performed at the end of PN coherence period or after all the transmitted signals which are provided a reference have been received. In this example, all the signals which are to provide a reference are used to compensate for PN. Information relating to the PN coherency period may be provided in one or more of the following: RRC, MAC-CE (medium access control- control element) and DCI (downlink control information).

As example, the information relating to the PN coherency period may be provided as part of the QCL (quasi co-location) framework. For example a new QCL type for PN (e.g., QCL type E for PN) may be defined with a related PN coherence period or PN validity timer or TDW such as previously discussed.

Some embodiments may be used where the PN may be correlated over multiple symbols/slots.. The TDW or PN validity timer may be larger than single transmission occasion of PDSCH or PUSCH where the PTRS may be available.

Some embodiments may be used with any waveform.

Some embodiments may be used with any UL or DL physical channel. Some embodiments may be used with channels which do not have a PTRS or reference signal (e.g., PDSCH, PDCCH, PUSCH, PUCCH, etc.).

Some embodiments may allow more accurate PN estimations during the TDW or PN validity timer (for example by averaging or weighting of estimations or interpolating via time Wiener filtering or other suitable filtering and avoiding using outdated PN estimations outside the indicated period).

In some embodiments, the correlated PN is estimated more accurately and the uncorrelated PN part is decoupled from the estimation since uncorrelated PN average may be zero. In some embodiments, the uncorrelated PN part may be estimated separately using an appropriate method.

In some embodiments, the disclosure of full PN characteristics or PN model for a UE local oscillator to the network may be avoided or reduced.

Some embodiments may avoid the gNB or NW having to determine for all UE their PN coherence periods based on their UE PN characteristics reporting.

Some embodiments may allow for a relatively smaller signaling overhead which use a relatively small number of bits to convey information relating to the PN coherency.

Some embodiments may allow the determination by the gNB of the PN validity timer and/or a TDW for PN pre/post compensation to achieve a better coverage, higher energy and/or spectral efficiency.

Some embodiments may allow the transmitter/receiver Tx/Rx to adjust its PN pre/post-compensation, PN estimation algorithm and/or PN estimation frequency for a lower average computational complexity over the validity timer or TDW.

Some embodiments may provide better coverage for all physical channels, including channel which may be without a PTRS or other reference channels (e.g., PDCCH, PUCCH). This may be achieved by pre-compensating for PN at the transmitter within the validity timer without any additional PTRS overhead if any. Alternatively or additionally, this may be achieved by PN post-compensating at the receiver Rx. This may be by using a previous PN estimation from the opposite link within PN validity timer where the same LOs at the transmitter/receiver are used. The opposite link is DL when PN pre-compensation is at UE side in UL, and UL when PN pre-compensation is at gNB in DL.

Some embodiments may enhance coverage/energy efficiency and/or spectral efficiency since PN pre and/or post-compensation within the validity timer may enhance the signal quality (e.g., EVM error vector magnitude) and thus the SNR observed at the receiver.

Some embodiments may allow the use of a higher modulation order and achieve higher spectral efficiency with that higher modulation order.

Some embodiments may adapt dynamically to the PN pre/post-compensation algorithm.

Some embodiments may reduce the computational complexity for PN estimation by adjusting the estimator algorithm and/or to reduce/avoid the PN estimation frequency within the validity timer.

In the previous examples, PN coherence information is provided to the gNB by the UE. It should be appreciated that in some embodiments, the gNB may provide PN coherence information to the UE. For example, the PTRS or other reference signal configuration may be adjusted by the UE according to indicated PN coherence information provided by the gNB. As example, a high correlation level within a predetermined duration may allow the UE to reduce the PTRS or other reference signal density and vice versa. The UE may use information about the high correlation level to reduce the PTRS or other reference signal density.

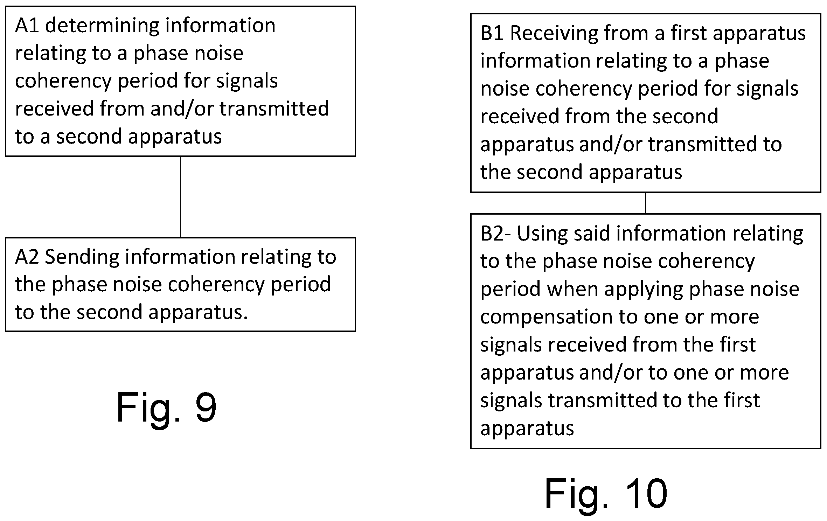

Reference is made to Figure 9 which shows a method of some embodiments.

This method may be performed by an apparatus. The apparatus may be a user equipment, may be in a base station or be a base station.

The apparatus may comprise suitable means, such as circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to Figure 2 or 3.

The method may be provided by computer program code or computer executable instructions.

The method may comprise as referenced A1, determining information relating to a phase noise coherency period for signals received from and/or transmitted to a second apparatus.

The method may comprise as referenced A2, sending information relating to the phase noise coherency period to the second apparatus.

It should be appreciated that the method outlined in Figure 9 may be modified to include any of the previously described features.

Reference is made to Figure 10 which shows another method of some embodiments.

This method may be performed by an apparatus. The apparatus may be a user equipment, be in a base station or be a base station.

The apparatus may comprise suitable means, such as circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to Figure 2 or 3.

The method may be provided by computer program code or computer executable instructions.

The method may comprise as referenced B1, receiving from a first apparatus information relating to a phase noise coherency period for signals received from the second apparatus and/or transmitted to the second apparatus.

The method may comprise as referenced B2, using said information relating to the phase noise coherency period when applying phase noise compensation to one or more signals received from the first apparatus and/or to one or more signals transmitted to the first apparatus.

It should be appreciated that the method outlined in Figure 10 may be modified to include any of the previously described features.

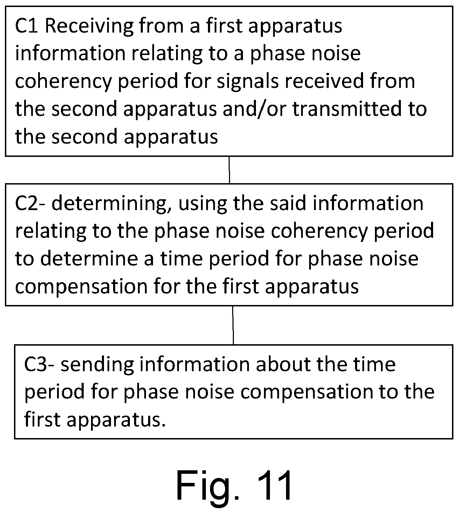

Reference is made to Figure 11 which shows another method of some embodiments.

This method may be performed by an apparatus. The apparatus may be a user equipment, be in a base station or be a base station.

The apparatus may comprise suitable means, such as circuitry for providing the method.

Alternatively or additionally, the apparatus may comprise at least one processor and at least one memory storing instructions that, when executed by the at least one processor cause the apparatus at least to provide the method below.

Alternatively or additionally, the apparatus may be such as discussed in relation to Figure 2 or 3.

The method may be provided by computer program code or computer executable instructions.

The method may comprise as referenced C1, receiving from a first apparatus information relating to a phase noise coherency period for signals received from the second apparatus and/or transmitted to the second apparatus.

The method may comprise as referenced C2, determining, using the said information relating to the phase noise coherency period to determine a time period for phase noise compensation for the first apparatus.

The method may comprise as referenced C3, sending information about the time period for phase noise compensation to the first apparatus.

It should be appreciated that the method outlined in Figure 11 may be modified to include any of the previously described features.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware; and/or
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Various example embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various example embodiments of the disclosure is set out by the independent claims. The example embodiments and features thereof, if any, described in this disclosure that do not fall under the scope of the independent claims are to be interpreted as examples useful for understanding various example embodiments of the disclosure.

The foregoing description has provided, by way of non-limiting and illustrative examples, a full and informative description of the various example embodiments of this disclosure. However, various modifications and adaptations may become apparent to those skilled in the relevant arts in view of the foregoing description, when read in conjunction with the accompanying drawings and the claims. However, all such and similar modifications of the teachings will still fall within the various example embodiments of the disclosure as set forth in the claims. By way of non-limiting and illustrative example, there is a further example embodiment comprising a combination of one or more example embodiments with any of the other example embodiments previously discussed.

**Claims**

1. A first apparatus, comprising at least one processor and at least one memory storing instructions that, when executed by the at least one processor, cause the apparatus at least to perform:

   determining information relating to a phase noise coherency period for signals received from and/or transmitted to a second apparatus; and
   sending information relating to the phase noise coherency period to the second apparatus.

2. The first apparatus as claimed in claim 1 wherein the determining information associated with the phase noise coherency period for signals received from the second apparatus comprises one or more of:

   determining a time period in which phase noise is coherent;
   determining a time domain window in which phase noise is coherent; and/or
   determining information associated with the phase noise coherency period for signals received from the second apparatus comprises determining a validity timer associated with the phase noise coherency period.

3. The first apparatus as claimed in claim 1, wherein the determining information associated with the phase noise coherency period for signals received from the second apparatus comprises determining for a defined time period information about one or more levels of phase noise coherency within that defined time period.

4. The first apparatus as claimed in any preceding claim, wherein the information associated with the phase noise coherency period comprises information about one or more levels of phase noise coherency associated with the phase noise coherency period.

5. The first apparatus as claimed in claim 4, wherein the level of phase noise coherency is associated with one or more frequencies; one or more bandwidths; one or more subcarrier spacing; one or more reference signal time density; and/or one or more modulation and coding scheme.

6. The first apparatus as claimed in any preceding claim, wherein the information associated with the phase noise coherency period is associated with one or more of:
   one or more frequencies; one or more bandwidths; one or more subcarrier spacing; one or more reference signal time density; and/or one or more modulation and coding scheme.

7. The first apparatus as claimed in any preceding claim, wherein the determining information associated with the phase noise coherency period for signals received from the second apparatus is based on one or more of a configuration of the first apparatus or hardware of the first apparatus.

8. The first apparatus as claimed in any preceding claim, wherein the determining information associated with the phase noise coherency period for signals received from the second apparatus comprises determining information about buffering capacity in the first apparatus usable for phase noise compensation.

9. The first apparatus as claimed in any preceding claim, wherein the first apparatus is caused to receive information from the second apparatus relating to a time period for phase noise compensation.

10. The first apparatus as claimed in claim 9, wherein the first apparatus is caused to perform using a plurality of signals received from the second apparatus at different times within the time period for phase noise compensation to provide phase noise compensation for one or more of signals received from the second apparatus or signals transmitted to the second apparatus.

**11.** The first apparatus as claimed in claim 9 or 10, wherein the first apparatus is caused to perform controlling the first apparatus to avoid one or more events which would change the phase noise coherency during said time period for phase noise compensation.

**12.** The first apparatus as claimed in claim 9 or 10, wherein the apparatus is caused to perform determining that one or more events which cause the phase noise coherency to change are to be performed in the time period for phase noise compensation and in response, send information indicating that the phase noise coherency will change to the second apparatus.

**13.** A second apparatus comprising at least one processor and at least one memory storing instructions that, when executed by the at least one processor, cause the apparatus at least to perform:

receiving from a first apparatus information relating to a phase noise coherency period for signals received from the second apparatus and/or transmitted to the second apparatus; and

using said information relating to the phase noise coherency period when applying phase noise compensation to one or more signals received from the first apparatus and/or to one or more signals transmitted to the first apparatus.

**14.** A method comprising:

determining information relating to a phase noise coherency period for signals received from and/or transmitted to a second apparatus; and

sending information relating to the phase noise coherency period to the second apparatus.

**15.** A method comprising:

receiving from a first apparatus information relating to a phase noise coherency period for signals received from the second apparatus and/or transmitted to the second apparatus; and

using said information relating to the phase noise coherency period when applying phase noise compensation to one or more signals received from the first apparatus and/or to one or more signals transmitted to the first apparatus.

Fig. 1

Fig. 2

Fig. 3

Fig. 4

Fig. 5

EP 4 535 739 A1

Fig. 6

EP 4 535 739 A1

Fig. 7

EP 4 535 739 A1

## Fig. 8

800 PN coherence period starts

802 REF1 received

804 Use REF1 with PN compensation algorithm to provide PN compensation

806 REF2 received

808 Use REF1 and REF2 with PN compensation algorithm to provide PN compensation

810 REF3 received

812 Use REF1, REF2 and REF3 with PN compensation algorithm to provide PN compensation

814 PN coherence period ends

A1 determining information relating to a phase noise coherency period for signals received from and/or transmitted to a second apparatus

A2 Sending information relating to the phase noise coherency period to the second apparatus.

# Fig. 9

B1 Receiving from a first apparatus information relating to a phase noise coherency period for signals received from the second apparatus and/or transmitted to the second apparatus

B2- Using said information relating to the phase noise coherency period when applying phase noise compensation to one or more signals received from the first apparatus and/or to one or more signals transmitted to the first apparatus

# Fig. 10

C1 Receiving from a first apparatus information relating to a phase noise coherency period for signals received from the second apparatus and/or transmitted to the second apparatus

C2- determining, using the said information relating to the phase noise coherency period to determine a time period for phase noise compensation for the first apparatus

C3- sending information about the time period for phase noise compensation to the first apparatus.

Fig. 11

Europäisches
Patentamt

European
Patent Office

Office européen
des brevets

# EUROPEAN SEARCH REPORT

**Application Number**

EP 23 20 1285

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/099489 A1 (SAKAMOTO MITSUO [TW]) 26 March 2020 (2020-03-26) * figures 1,2 * * paragraphs [0028], [0029], [0064] * | 1-15 | INV. H04L27/00 H04L27/26 |
| X | US 2022/141064 A1 (HORN IDAN MICHAEL [IL] ET AL) 5 May 2022 (2022-05-05) * figures 2,5, 15, 17 * * paragraphs [0102], [0128], [0133] – [0138] * | 1-15 | |
| X | WO 2023/090812 A1 (ELECTRONICS & TELECOMMUNICATIONS RES INST [KR]) 25 May 2023 (2023-05-25) * paragraphs [0154], [0155], [0162], [0164] * | 1-15 | |

**TECHNICAL FIELDS SEARCHED (IPC)**

H04L

The present search report has been drawn up for all claims

| Place of search | Date of completion of the search | Examiner |
|---|---|---|
| Berlin | 7 March 2024 | Feng, Mei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 1285

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2024

| Patent document cited in search report | Publication date | Patent family member(s) | | Publication date |
|---|---|---|---|---|
| US 2020099489 A1 | 26-03-2020 | NONE | | |
| US 2022141064 A1 | 05-05-2022 | CN | 116420313 A | 11-07-2023 |
| | | EP | 4241426 A2 | 13-09-2023 |
| | | US | 2022141064 A1 | 05-05-2022 |
| | | WO | 2022098456 A2 | 12-05-2022 |
| WO 2023090812 A1 | 25-05-2023 | KR | 20230072435 A | 24-05-2023 |
| | | WO | 2023090812 A1 | 25-05-2023 |

For more details about this annex : see Official Journal of the European Patent Office, No. 12/82